# EUROPÄISCHE PATENTANMELDUNG

(11) **EP 2 399 808 A2**
(43) Veröffentlichungstag der Anmeldung: **28.12.2011**
(21) Anmeldenummer: 11171361.6
(22) Anmeldetag: 24.06.2011
(51) Int. Cl.: B62H 1/02

(54) **Fahrradstützvorrichtung sowie Fahrrad mit entsprechender Stützvorrichtung**

(30) Priorität: 25.06.2010 DE 102010030511
(71) Anmelder: GEBRÜDER PLETSCHER AG, CH-8460 Marthalen (CH)
(72) Erfinder: Pletscher, Hans, 846o Marthalen (CH)
(74) Vertreter: Wenzel & Kalkoff

(57) **Zusammenfassung**

Die Erfindung betrifft eine Fahrradstützvorrichtung (1, 1') mit einem Stützkopf (3, 3') zur Verbindung mit einem Fahrradrahmen (2) und einer zwischen einer Stützposition und einer Fahrposition verschwenkbar im Stützkopf (3, 3') gelagerten Stütze (8). Um eine Fahrradstützvorrichtung (1, 1') und ein Fahrrad mit entsprechender Fahrradstützvorrichtung (1, 1') bereit zu stellen, bei welcher das Unfallrisiko reduziert ist, weist die Fahrradstützvorrichtung (1, 1') mindestens ein zwischen dem Stützkopf (3, 3') und der Stütze (8) angeordnetes Rückstellelement auf, um die Stütze (8) im unbelasteten Zustand aus der Stützposition in die Fahrposition zu verschwenken.

## Beschreibung

Die Erfindung betrifft eine Fahrradstützvorrichtung sowie ein Fahrrad mit einer entsprechenden Stützvorrichtung.

Stützvorrichtungen bzw. Stützen für Fahrräder sind im Stand der Technik bekannt, um ein Fahrrad bei Nichtgebrauch in einer aufrechten Position abstellen zu können. Übliche Stützvorrichtungen sind hierzu schwenkbar am Fahrradrahmen angebracht und können von einer Stützposition, in der die Stütze das Fahrrad in einer aufrechten Position abstützt in eine Fahrposition verschwenkt werden, in welcher die Stütze so verschwenkt ist, dass eine ungehinderte Benutzung des Fahrrades möglich ist.

Neben Mittelbaustützen, die zur Befestigung am Fahrradrahmen im Bereich des Tretlagers ausgebildet sind, sind auch sogenannte Hinterbaustützen bekannt, die im Bereich der Radnabe des Hinterrades mit dem Fahrradrahmen oder einem mit dem Fahrradrahmen verbundenen Teil befestigt sind. Derartige Stützen sind üblicherweise federbelastet und rastieren in der Stützposition, so dass die Stütze zum Abstellen des Fahrrades sicher festgelegt ist.

Ein Problem bekannter Stützvorrichtungen besteht jedoch in einem erheblichen Unfallrisiko, bspw. wenn ein Benutzer vergessen sollte, die rastierte Stütze vor Benutzung des Fahrrades in die Fahrposition zu bringen. Dieses Risiko ist insbesondere bei Hinterbaustützen relativ hoch, da die Stütze aufgrund der Anordnung am hinteren Bereich des Rahmes bei Verwendung des Fahrrades leicht übersehen wird.

Es besteht daher die Aufgabe, eine Fahrradstützvorrichtung und ein Fahrrad mit entsprechender Fahrradstützvorrichtung bereit zu stellen, bei der das Unfallrisiko deutlich reduziert und gleichzeitig eine kostengünstige Herstellung ermöglicht ist.

Die Aufgabe wird durch eine Fahrradstützvorrichtung und ein Fahrrad mit Fahrradstützvorrichtung gemäß der unabhängigen Ansprüche gelöst. Bevorzugte Ausführungsformen der Erfindung sind in den Unteransprüchen beschrieben.

Die erfindungsgemäße Fahrradstützvorrichtung weist mindestens einen Stützkopf zur Verbindung mit einem Fahrradrahmen und einer zwischen einer Stützposition und einer Fahrposition verschwenkbar im Stützkopf gelagerten Stütze auf. Ferner ist ein zwischen dem Stützkopf und der Stütze angeordnetes Rückstellelement vorgesehen, um die Stütze im unbelasteten Zustand aus der Stützposition in die Fahrposition zu verschwenken.

Im Rahmen der vorliegenden Erfindung wird unter dem Begriff der "Stützposition" eine Position verstanden, in der die Stützvorrichtung in der Gebrauchslage das Fahrrad in einer im Wesentlichen aufrechten Position abstützt und insofern die auftretenden Kräfte sicher aufnimmt. In der Fahrposition ist die Stütze derart angeordnet, dass eine weitgehend ungehinderte Benutzung des Fahrrades möglich ist, d. h. dass die Stütze einen sicheren Abstand zur Fahrbahnoberfläche einhält.

Erfindungsgemäß sorgt das Rückstellelement vorteilhaft für ein selbsttätiges Rückstellen der Stütze in die Fahrposition. Vorteilhaft ist somit keine manuelle Betätigung der Stützvorrichtung notwendig, wenn das abgestellte Fahrrad wieder benutzt wird.

Das Rückstellelement ist hierbei derart ausgebildet, dass die Stütze im unbelasteten Zustand aus der Stützposition in die Fahrposition verschwenkt. Allerdings soll die Stütze sicher in der Stützposition verbleiben, wenn das abzustützende Gewicht des Fahrrades auf der Vorrichtung lastet. Unter dem "unbelasteten Zustand" wird daher ein Betriebszustand verstanden, in dem keine wesentliche Kraft von dem Fahrrad auf die Stütze ausgeübt wird, bspw. wenn ein Benutzer das Rad aus einer leicht seitlich geneigten Stützposition senkrecht verschwenkt und die Stütze nicht mehr in Kontakt mit der Fahrbahnoberfläche steht. Die erfindungsgemäße Stützvorrichtung und insbesondere das Rückstellelement sollten naturgemäß an das Gewicht des Rades und die dadurch auftretenden Kräfte angepasst sein.

Stützkopf und Stütze der erfindungsgemäßen Fahrradstützvorrichtung können sämtliche geeignete Ausgestaltungen aufweisen. Bevorzugt weist die Stütze einen länglichen Stützarm auf, welcher über einen Lagerabschnitt der Stütze mit dem Stützkopf verbunden ist. Der Stützarm kann ein- oder mehrteilig ausgebildet sein, um bspw. eine einfache Längenänderung je nach Rahmengröße des Fahrrades zu ermöglichen.

Der Stützkopf ist mindestens derart ausgebildet, dass eine Verbindung mit einem Fahrradrahmen, bspw. über eine Schraubverbindung möglich ist. Der Stützkopf bildet ferner ein Lager für die Stütze, um diese zwischen der Stützposition und der Fahrposition zu verschwenken. Der Stützkopf kann bspw. so ausgebildet sein, dass die Stütze translatorisch zwischen den beiden Positionen verschwenkbar ist. Bevorzugt ist die Stütze durch Drehung um eine Schwenkachse von der Stützposition in die Fahrposition bewegbar. Der Stützkopf kann hierzu bevorzugt einen mindestens einseitig offenen Hohlraum aufweisen, der den Lagerabschnitt der Stütze mindestens teilweise aufnimmt.

Das erfindungsgemäße Rückstellelement kann sämtliche geeignete Ausgestaltungen aufweisen, um im unbelasteten Zustand die Stütze aus der Stützposition in die Fahrposition zu verschwenken, d. h. um eine entsprechend in die Fahrposition gerichtete Rückstellkraft auf die Stütze auszuüben. Bevorzugt weist das Rückstellelement ein oder mehrere Federn, wie bspw. Torsionsfedern auf. Alternativ oder ergänzend kann das Rückstellelement bspw. auch einen oder mehrere Hydraulikzylinder und/oder Gasdruckzylinder aufweisen, um die Rückstellkraft bereitzustellen. Bevorzugt weist das Rückstellelement ein oder mehrere Biegefedern auf, bevorzugt spiralförmig gewundene Biegefedern, wie bspw. Spiralfedern. Insbesondere bevorzugt weist das Rückstellelement ein oder mehrere Schraubenzug-, Schraubendruck- oder Spiralfedern auf.

Nach einer bevorzugten Weiterbildung der Erfindung ist das Rückstellelement derart zwischen Stütze und Stützkopf angeordnet, dass das Rückstellelement über den gesamten Verstellbereich der Stütze eine auf die Fahrposition gerichtete Rückstellkraft auf die Stütze ausübt, d. h. unabhängig von der Position der Stütze ist das Rückstellelement auf die Fahrposition vorgespannt. Die vorliegende Ausgestaltung verbessert die Betriebssicherheit der erfindungsgemäßen Fahrradstützvorrichtung weiter, da selbst für den Fall, dass ein Benutzer beim Abstellen die Stütze nicht in die Stützposition gebracht hat, eine Rückstellung erfolgt, sobald die Stütze entlastet ist.

Die Fahrradstützvorrichtung kann bspw. zur Verbindung mit dem Fahrradrahmen im Bereich des Tretlagers und somit als Mittelbaustütze ausgebildet sein. Bevorzugt ist die Fahrradstützvorrichtung eine Hinterradstützvorrichtung. Gemäß der vorliegenden Ausführungsform ist die Fahrradstützvorrichtung somit zur Verbindung mit einem Fahrradrahmen im Bereich der Nabe des Hinterrades ausgebildet. Hierzu kann insbesondere der Stützkopf entsprechend zur Verbindung mit einer Kettenstrebe oder Sattelstrebe, einem Ausfallende oder einem weiteren Teil des Rahmens ausgebildet sein. Naturgemäß ist es ebenso denkbar, dass die Stütze nicht direkt, sondern über ein entsprechend mit dem Rahmen im Bereich der Radnabe verbundenen Zwischenstück mit diesem verbunden ist.

Nach einer bevorzugten Ausführungsform weist der Stützkopf mindestens einen Befestigungsteil zur lösbaren Verbindung mit dem Fahrradrahmen auf. Der Befestigungsteil weist mindestens zwei Öffnungen auf, so dass die Stütze entsprechend mit dem Rahmen bspw. über Schraubverbindungen verbindbar ist. So kann die Stützvorrichtung bspw. mit einem unlösbar im Bereich der Hinterradnabe des Rahmens fixierten Befestigungselement verbunden werden. Die vorliegende Ausgestaltung der Stützvorrichtung erlaubt eine besonders sichere Befestigung an dem Fahrradrahmen und stellt darüber hinaus eine drehfeste Verbindung her, was insbesondere bei Hinterradstützvorrichtungen aufgrund der am Hinterrad auftretenden Kräfte vorteilhaft ist. Bevorzugt weisen die Öffnungen einen Abstand von 18 mm oder 40 mm (gemessen von Öffnungsmitte zu Öffnungsmitte) auf.

Zweckmäßig weist der Befestigungsteil eine entsprechend der Ausbildung des Fahrradrahmens ausgebildete Anlagefläche auf. Im Falle der Befestigung an einer Kettenstrebe kann die Anlagefläche bspw. rund bzw. konkav ausgeführt sein, insbesondere bevorzugt ist die Anlagefläche jedoch im Wesentlichen eben ausgeführt, um eine nochmals verbesserte Kraftübertragung zu gewährleisten. Die Anlagefläche kann zur Verbindung auf einer Außen- und/oder Innenseite des Rahmens ausgebildet sein.

Gemäß einer vorteilhaften Weiterbildung der Erfindung weist die Fahrradstützvorrichtung ferner ein Montageelement zur Verbindung mit dem Stützkopf auf, wobei das Rückstellelement zwischen dem Montageelement und der Stütze angeordnet ist. Das Montageelement kann integral mit dem Stützkopf ausgebildet sein, bevorzugt ist das Montageelement lösbar, bspw. über mindestens eine Schraubverbindung mit dem Stützkopf verbindbar, so dass eine leichte Nachrüstung oder ein Austausch des Montageelements möglich ist. Hierzu kann das Montageelement bspw. ein oder zwei Öffnungen zur Befestigung mittels Schraubverbindungen aufweisen, wobei der Abstand dieser Öffnungen bevorzugt dem Abstand der Öffnungen des Befestigungsteils entspricht, so dass eine gemeinsame Befestigung des Stützkopfes und des Montageelements an dem Fahrradrahmen möglich ist. Im Falle, dass das Rückstellelement als Feder ausgebildet ist, sollte das Montageelement bevorzugt eine Aufnahme, bspw. eine entsprechende Kerbe oder eine Aufnahmeöffnung, für ein Federende aufweisen. Das zweite Ende der Feder ist in diesem Falle insbesondere bevorzugt beabstandet von der Schwenkachse an der Stütze, bspw. an einem entsprechenden Bolzen, befestigt.

Alternativ oder ergänzend weist der Stützkopf mindestens einen Hohlraum zur mindestens teilweisen Aufnahme des Rückstellelements auf. Die vorliegende Ausführung ist besonders störunanfällig, da das Rückstellelement durch die Anordnung im Inneren des Stützkopfes vor Verschmutzung geschützt ist. Ferner ist die Bauform besonders kompakt. Der Hohlraum kann sämtliche geeignete Ausgestaltungen aufweisen, so dass das Rückstellelement mindestens teilweise im Hohlraum angeordnet ist. Bevorzugt nimmt der Hohlraum das Rückstellelement vollständig auf.

Insbesondere bevorzugt weist die Stütze einen Lagerabschnitt auf, der sich mindestens teilweise in den Hohlraum erstreckt und um eine Schwenkachse gegenüber dem Stützkopf drehbar gelagert ist. Gemäß der vorliegenden Ausbildung ist somit die Stütze im Inneren des Stützkopfes drehbar gelagert, wodurch eine hochkompakte Bauform gegeben ist.

Zweckmäßig weist das Rückstellelement eine Druckfeder und/oder Biegefeder auf, die zwischen einer Aufnahme des Stützkopfes und einer Aufnahme am Lagerabschnitt der Stütze angeordnet ist. Die vorliegende bevorzugte Ausgestaltung ermöglicht einen besonders kostengünstigen Aufbau der Stützvorrichtung.

Die Aufnahmen an Stützkopf und Lagerabschnitt sollten hierbei entsprechend der Ausgestaltung der Druckfeder und/oder Biegefeder ausgebildet sein, um einen sicheren Halt der Feder zu gewährleisten. Bevorzugt ist die Aufnahme des Stützkopfes integral mit diesem ausgebildet und begrenzt den Hohlraum. Insbesondere bevorzugt ist die stützenseitige Aufnahme im Wesentlichen kugelförmig ausgebildet, wodurch eine besonders sichere Befestigung der Druckfeder bzw. Biegefeder an der Stütze gegeben ist.

Die Druckfeder bzw. Biegefeder sollte entsprechend der jeweiligen Ausgestaltung der Stützvorrichtung ausgebildet sein; bevorzugt ist die Druckfeder eine Schraubenfeder. Eine geeignete Biegefeder ist bspw. eine Spiralfeder.

Zweckmäßig weist der Lagerabschnitt mindestens einen Anschlag auf, der die Bewegung der Stütze begrenzt. Bevorzugt ist der Anschlag derart an dem Lagerabschnitt angeordnet, dass die Druckfeder bzw. Biegefeder, bezogen auf den Verstellbereich der Stütze, in der Stützposition die höchste Rückstellkraft auf die Stütze ausübt, d. h. dass die Druckfeder bzw. Biegefeder in der Stützposition die höchste Kompression aufweist.

Gemäß eines weiteren Aspekts der Erfindung ist ein Fahrrad mit einer Fahrradstützvorrichtung nach einer der vorstehend beschrieben Ausführungen vorgesehen. Im Rahmen der vorliegenden Erfindung werden unter dem Begriff "Fahrrad" neben rein per Muskelkraft betreibbaren Zweirädern auch ganz oder teilweise elektrisch angetriebene Zweiräder verstanden, welche auch als "E-Bikes" bezeichnet werden.

Die Erfindung wird nachstehend anhand von Ausführungsbeispielen erläutert. Es zeigt:
- Fig. 1: ein erstes Ausführungsbeispiel der erfindungsgemäßen Fahrradstützvorrichtung in einer perspektivischen schematischen Ansicht in der Stützposition,
- Fig. 2: eine Detailansicht des Stützkopfes gemäß Fig. 1,
- Fig. 3: eine Detailansicht des Stützkopfes gemäß Fig. 1 in der Fahrposition,
- Fig. 4a: eine Frontansicht eines zweiten Ausführungsbeispiels der erfindungsgemäßen Fahrradstützvorrichtung in der Stützposition,
- Fig. 4b: eine Rückansicht des Ausführungsbeispiels gemäß Fig. 4a,
- Fig. 5a: eine Frontansicht des Ausführungsbeispiels aus Fig. 4a in der Fahrposition,
- Fig. 5b: eine Rückansicht des Ausführungsbeispiels gemäß Fig. 5a,
- Fig. 6a: eine Frontansicht eines dritten Ausführungsbeispiels der erfindungsgemäßen Fahrradstütze in der Stützposition,
- Fig. 6b: eine Frontansicht des Ausführungsbeispiels aus Fig. 6a in der Fahrposition und
- Fig. 6c: eine perspektivische Ansicht des Ausführungsbeispiels gemäß Fig. 6b.

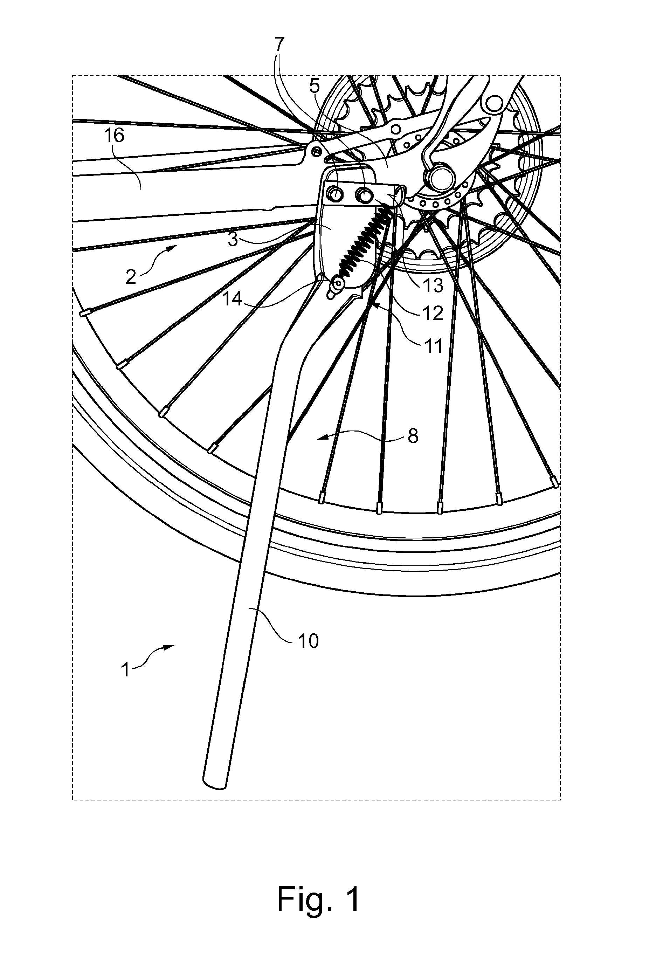

Fig. 1 zeigt ein erstes Ausführungsbeispiel der erfindungsgemäßen Fahrradstützvorrichtung 1 in einer perspektivischen, schematischen Ansicht. Die Stützvorrichtung 1 ist in Fig. 1 in der Gebrauchslage an einem Fahrradrahmen 2 zur Verdeutlichung der Funktionsweise dargestellt, wobei nur der Bereich der Hinterradnabe des Fahrradrahmens 2 mit Kettenstrebe 16 und Ausfallende 5 gezeigt ist.

Die Fahrradstützvorrichtung 1 ist als Hinterrad-Stützvorrichtung ausgebildet und weist einen Stützkopf 3 zur Verbindung mit dem Fahrradrahmen 2 und vorliegend mit dem Ausfallende 5 auf.

Eine Stütze 8 ist im Stützkopf 3 drehbar gelagert und lässt sich zwischen einer in Fig. 1 dargestellten Stützposition und einer Fahrposition verschwenken. Die Stütze 8 weist einen im Stützkopf 3 angeordneten Lagerabschnitt 11 und einen Stützarm 10 auf, der sich entsprechend der Rahmenhöhe erstreckt, um das Fahrrad in der gezeigten Stützposition auf dem Untergrund, bspw. einer Fahrbahnoberfläche, abzustützen. Die Stütze 8 nimmt somit die Kräfte des Fahrrades bzw. des Rahmens 2 sicher auf, wodurch das Rad somit in einer im Wesentlichen aufrechten, d.h. gegebenenfalls leicht seitlich gekippten Lage, gehalten ist. Wie gezeigt, ist die Stütze 8 bzw. der Stützarm 10 in dieser Position in der Gebrauchslage am Fahrrad im Wesentlichen senkrecht angeordnet.

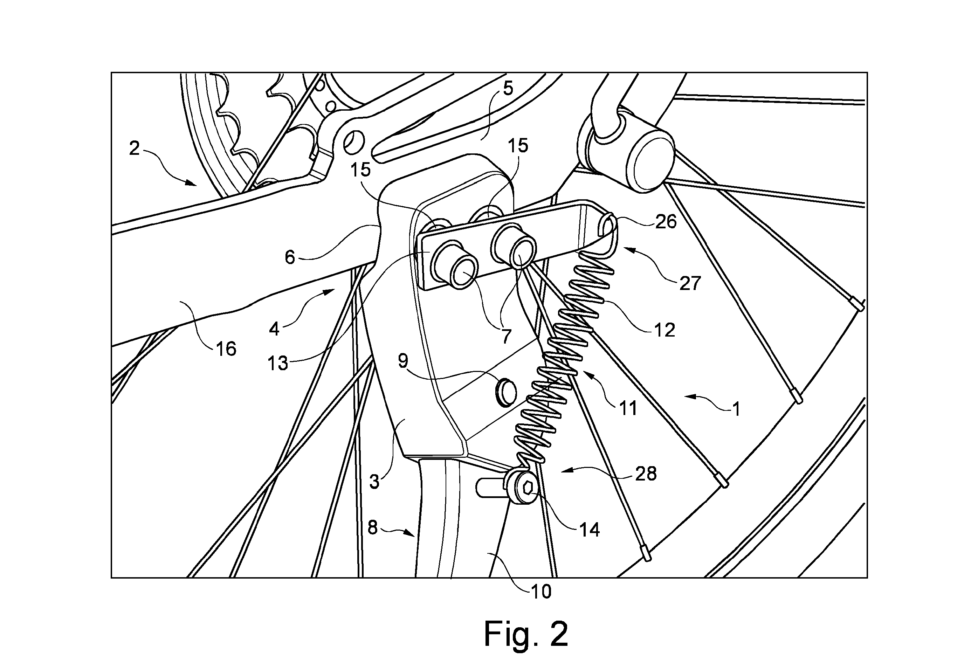

Fig. 2 zeigt eine Detailansicht des Stützkopfes 3 in der Stützposition gemäß Fig. 1. Wie gezeigt, ist der Stützkopf 3 integral mit einem Befestigungsteil 4 ausgebildet, dessen ebene Anlagefläche 6 an dem in dem vorliegenden Beispiel mit dem Fahrradrahmen 2 verschweißten Ausfallende 5 anliegt. Der Stützkopf 3 ist über zwei Schrauben 7 am Ausfallende 5 fixiert, die sich durch zwei Durchgangsöffnungen 25 (in Fig. 2 nicht gezeigt) im Befestigungsteil 4 erstrecken. Die Fixierung der Schrauben 7 am Ausfallende 5 erfolgt entweder durch entsprechende Muttern (nicht gezeigt) auf der der Stützvorrichtung 1 abgewandten Seite des Ausfallendes 5 oder mittels integral am Rahmen 2 vorgesehenen Gewindeöffnungen. Alternativ oder ergänzend können die Durchgangsöffnungen 25 mit entsprechenden Gewinden ausgestaltet sein.

Wie bereits erläutert, ist die Stütze 8 im Stützkopf 3 drehbar gelagert. Hierzu ist der Lagerabschnitt 11 in einer Öffnung bzw. in einem entsprechenden Hohlraum (nicht gezeigt) des Stützkopfes 3 aufgenommen. Als Schwenk- bzw. Drehachse 9 dient ein Zylinderstift, der durch den Stützkopf 3 und den Lagerabschnitt 11 der Stütze 8 greift.

Wie in Fig. 2 ferner dargestellt, ist eine Rückstellfeder 12 vorgesehen, die zwischen einem Montageelement 13 und der Stütze 8 angeordnet ist. Das Montageelement 13 ist vorliegend als Blechteil ausgeführt und weist einen seitlichen Arm auf, der das stützkopfseitige Ende 27 der Rückstellfeder 12 in einer Kerbe 26 aufnimmt. Zur Befestigung des stützenseitigen Endes 28 der Feder 12 an der Stütze 8 ist, wie gezeigt, eine Schraube 14 vorgesehen, die in eine im Stützarm 10 gebildete Gewindeöffnung eingreift. Das Montageelement 13 ist mittels entsprechender Befestigungsöffnungen über die beiden Schrauben 7 mit dem Stützkopf 3 verbunden, so dass eine lösbare Verbindung mit dem Stützkopf 3 gegeben ist. Zwei Distanzhülsen 15 sorgen für eine sichere Auflage.

Wie eingangs bemerkt, zeigt Fig. 2 die vorliegende Fahrradstützvorrichtung 1 in der Stützposition, um in der Gebrauchslage ein Fahrrad in einer im Wesentlichen aufrechten Position abzustützen. Die Rückstellfeder 12, vorliegend eine Schraubenzugfeder, ist in dieser Position gespannt und übt eine auf eine Fahrposition gerichtete Rückstellkraft auf die Stütze 8 aus.

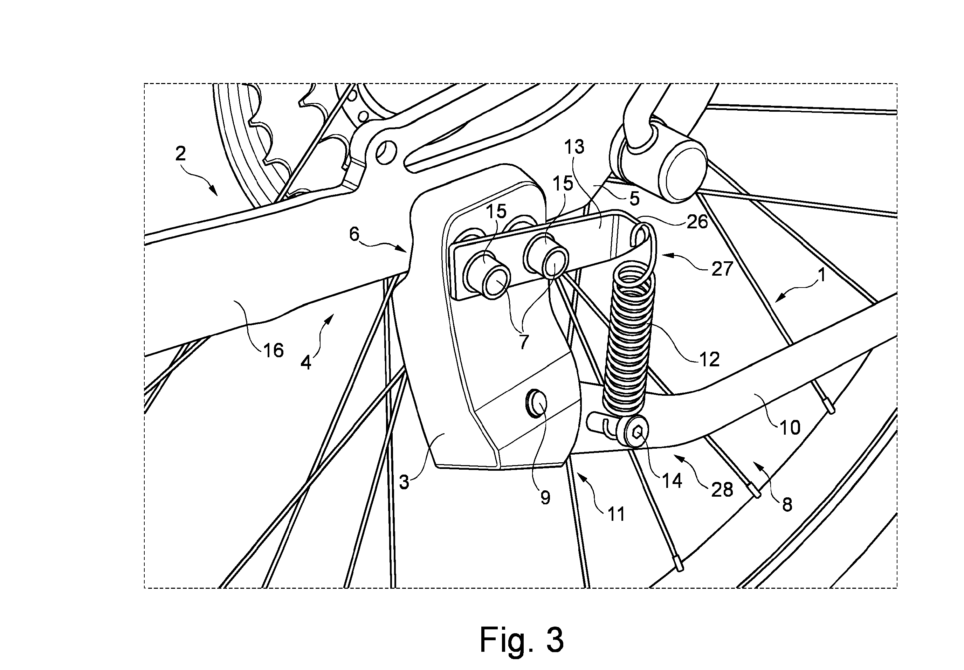

Fig. 3 zeigt die Vorrichtung 1 in der Fahrposition. Wie dargestellt, ist die Stütze 8 in dieser Position im Wesentlichen waagerecht angeordnet, wodurch ein für die Benutzung des Rades sicherer Abstand zwischen Stützarm 10 und Fahrbahnoberfläche gegeben ist.

Die Rückstellfeder 12 ist im vorliegenden Beispiel so ausgebildet, dass die Stütze 8 im unbelasteten Zustand selbsttätig in die in Fig. 3 gezeigte Fahrposition verschwenkt wird. Im belasteten Zustand, d. h. im Falle, dass das Fahrrad sich auf der Stützvorrichtung 1 abstützt, sorgt die vom Fahrrad auf die Stütze 8 ausgeübte Kraft aufgrund der Reibung zur Fahrbahnoberfläche dafür, dass die Stütze 8 in der Stützposition verbleibt.

Wird das Fahrrad vor der Benutzung leicht aufgerichtet, d. h. von einer gegebenenfalls leicht seitwärts geneigten Lage in eine senkrechte Lage gebracht, und der Kontakt zwischen Stützenarm 10 und der Oberfläche unterbrochen, sorgt die Rückstellkraft der Rückstellfeder 12 für ein selbsttätiges Verschwenken der Stütze 8 in die Fahrposition, was die Betriebssicherheit der Vorrichtung 1 und somit des Fahrrades in vorteilhafterweise erhöht.

Auch in der Fahrposition ist die Rückstellfeder 12 gegen einen entsprechenden Anschlag (nicht gezeigt) vorgespannt, so dass die Stütze 8 sicher in der Fahrposition verbleibt.

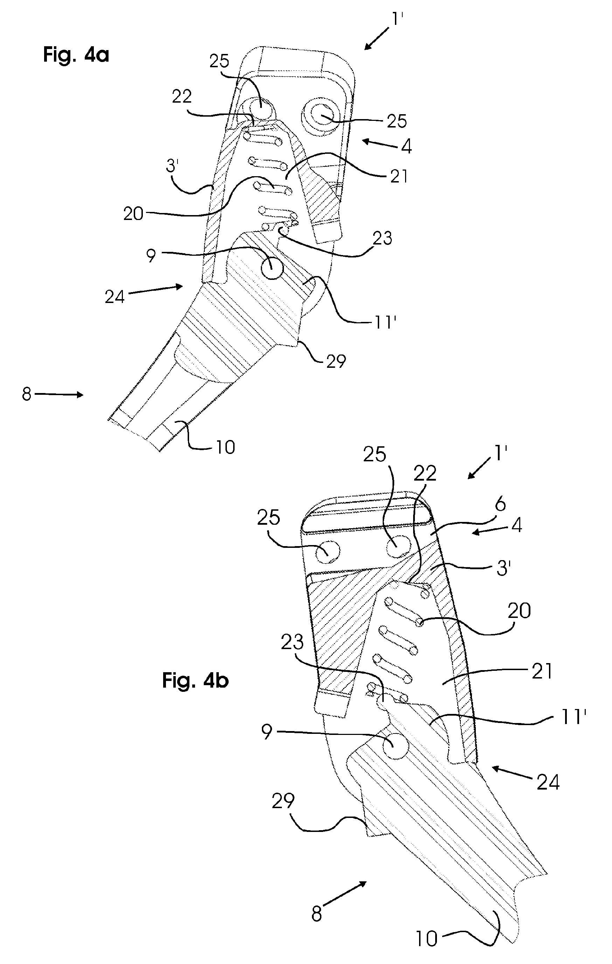

Die Fig. 4 - 5 zeigen ein zweites Ausführungsbeispiel einer erfindungsgemäßen Fahrradstützvorrichtung 1' in perspektivischen Ansichten, wobei zur besseren Übersicht jeweils Teile des Stützkopfes 3' entfernt wurden; die Stützvorrichtung 1' ist somit in einer teilweisen Schnittdarstellung gezeigt.

Das vorliegende Ausführungsbeispiel der Fahrradstützvorrichtung 1' entspricht im Wesentlichen dem mit Bezug zu den Fig. 1 - 3 erläuterten Ausführungsbeispiel, wobei jedoch vorliegend anstelle der Rückstellfeder 12 eine innerhalb des Stützkopfes 3' angeordnete Druckfeder 20, hier eine Schraubendruckfeder, vorgesehen ist.

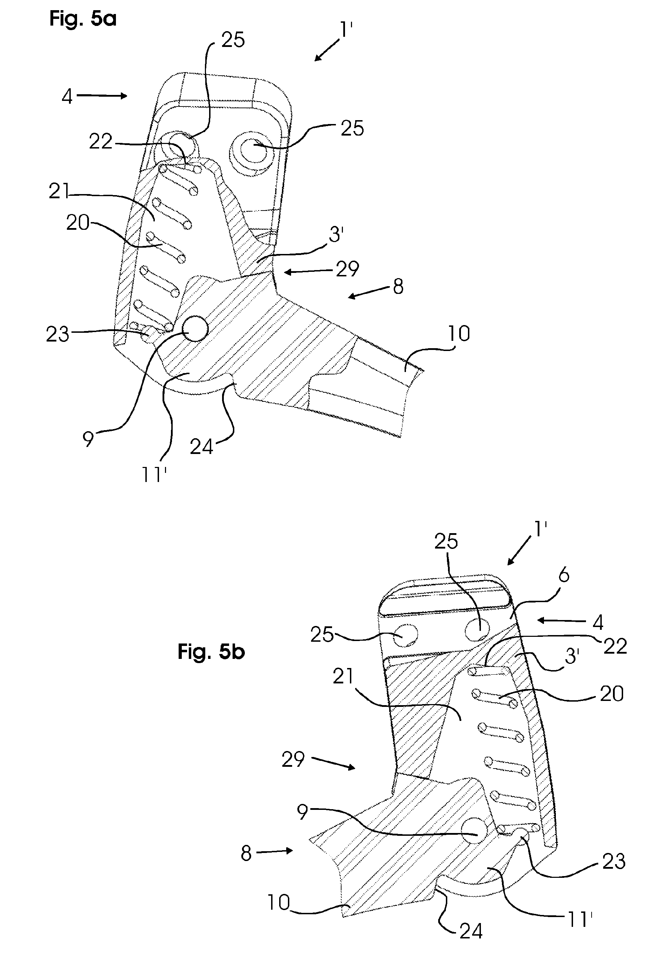

Um die Details der Ausgestaltung zu verdeutlichen, zeigten Fig. 4a und Fig. 5a die Fahrradstützvorrichtung 1' in einer Frontansicht entsprechend Fig. 2 und 3, während Fig. 4b und Fig. 5b eine montageseitige Ansicht der dem Fahrradrahmen (hier nicht gezeigt) zugewandten Rückseite der Fahrradstützvorrichtung 1' zeigt. Hierbei zeigen die Figuren 4a und 4b die Vorrichtung 1' in der Stützposition; die Figuren 5a und 5b zeigen die Vorrichtung 1' in der Fahrposition.

Wie sich insbesondere aus Fig. 4a entnehmen lässt, ist die Druckfeder 20 in einem einseitig offenen Hohlraum 21 im Inneren des Stützkopfes 3' zusammen mit dem Lagerabschnitt 11' der Stütze 8 angeordnet. Die Druckfeder 20 ist stützkopfseitig von einer entsprechenden Lagerfläche 22 aufgenommen, die eine Stirnseite des Hohlraums 21 bildet und den Hohlraum 21 auf der der Stütze 8 gegenüberliegenden Seite abschließt.

Auf der Seite der Stütze 8 ist am Lagerabschnitt 11' eine kugelförmige Aufnahme 23 vorgesehen, um die Druckfeder 20 unabhängig von der Position der Stütze 8 sicher zu halten. Der Lagerabschnitt 11' ist ferner mit einem ersten Anschlag 24 versehen, der sich in der Stützposition an dem Stützkopf 3' abstützt und die Drehbewegung der Stütze 8 begrenzt. Der erste Anschlag 24 und die kugelförmige Aufnahme 23 sind hinsichtlich der Schwenkachse 9 der Stütze 8 so angeordnet, dass die Druckfeder 20 unabhängig von der Position der Stütze 8 eine Kraft auf die Stütze 8 ausübt, welche durch die Drehlagerung der Stütze 8 in Richtung der in Fig. 5a und 5b gezeigten Fahrposition wirkt. Über den gesamten Verstellbereich der Stütze 8 ist die Druckfeder 20 somit auf die Fahrposition vorgespannt, so dass die Stütze 8 im unbelasteten Zustand selbsttätig sicher in die Fahrposition verschwenkt wird.

Hierbei nimmt die Kompression der Druckfeder 20 von der Stützposition in die Fahrposition und somit die auf die Stütze 8 ausgeübte Kraft stetig ab, so dass vorteilhaft kein Totpunkt bei der Drehbewegung gegeben ist. Die Stütze 8 kann so im unbelasteten Zustand sicher in die Fahrposition verschwenkt werden.

Wie in Fig. 5a und 5b gezeigt, ist auch in der Fahrposition die Druckfeder 20 nicht vollständig entlastet und drückt die Stütze 8 gegen einen zweiten Anschlag 29, so dass auch bei Erschütterungen während der Benutzung des Fahrrades die Stütze 8 sicher in der gezeigten Fahrposition verbleibt.

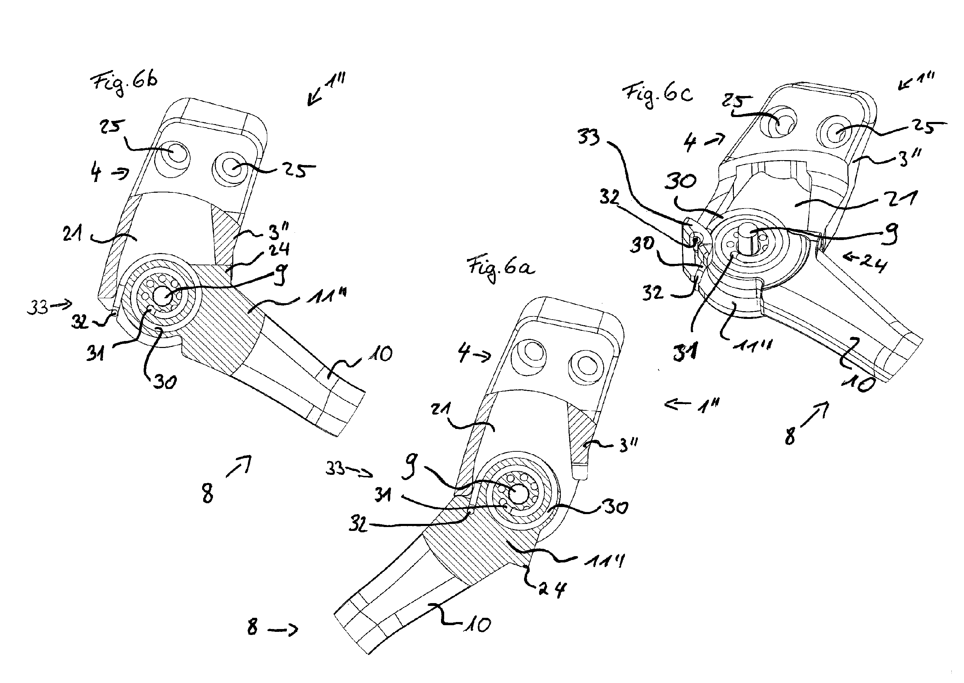

Die Fig. 6a-6c zeigen ein drittes Ausführungsbeispiel einer erfindungsgemäßen Fahrradstützvorrichtung 1" in perspektivischen Ansichten, wobei auch hier zur besseren Übersicht gemäß der Fig. 4-5 jeweils Teile des Stützkopfes 3" entfernt wurden und die Stützvorrichtung 1" somit auch vorliegend in einer teilweisen Schnittdarstellung gezeigt ist.

Das Ausführungsbeispiel der Fig. 6a-6c entspricht im Wesentlichen dem mit Bezug zu den Fig. 4-5 erläuterten Ausführungsbeispiel, wobei jedoch vorliegend anstelle der Druckfeder 20 zwei spiralförmig gewundene Biegefedern, nämlich Spiralfedern 30, vorgesehen sind.

Die Spiralfedern 30 sind auf entlang der Schwenkachse 9 gegenüberliegenden Seiten des Lagerabschnitts 11" oder Stütze 8 angeordnet; die Fig. 6a und 6b zeigen aus diesem Grunde nur eine Spiralfeder 30.

Zur Befestigung der Spiralfeder am Lagerabschnitt 11" ist dieser, wie gezeigt, mit mehreren Öffnungen versehen, wobei die stützseitigen Enden 31 der Spiralfedern 30, wie gezeigt, in jeweils eine dieser Öffnungen eingreifen. Die kopfseitigen Enden 32 der Spiralfedern 30 sind in einem seitlich angeordneten Lagerabschnitt 33 des Stützkopfes 3" aufgenommen.

Die Anordnung der Spiralfedern 30 bewirkt auch hier eine Kraft, die unabhängig von der Position der Stütze 8 in Richtung der in den Fig. 6b und 6c gezeigten Fahrposition wirkt. Über den gesamten Verstellbereich der Stütze 8 sind die Spiralfedern 30 somit auf die Fahrposition vorgespannt, wie auch hinsichtlich der zuvor erläuterten Ausführungsbeispiele im Detail erwähnt.

Wie in den Fig. 6a-6c gezeigt, sind auch die Spiralfedern 30 vorliegend im Hohlraum 21 des Stützkopfes 3" vorgesehen, so dass diese vorteilhaft vor äußeren Einwirkungen geschützt sind.

## Patentansprüche

1. Fahrradstützvorrichtung mit mindestens
- einem Stützkopf (3, 3') zur Verbindung mit einem Fahrradrahmen (2),
- einer zwischen einer Stützposition und einer Fahrposition verschwenkbar im Stützkopf (3, 3') gelagerten Stütze (8) und
- einem zwischen dem Stützkopf (3, 3') und der Stütze (8) angeordneten Rückstellelement, um die Stütze (8) im unbelasteten Zustand aus der Stützposition in die Fahrposition zu verschwenken.

2. Fahrradstützvorrichtung nach Anspruch 1, wobei das Rückstellelement derart zwischen Stütze (8) und Stützkopf (3, 3') angeordnet ist, dass das Rückstellelement über den gesamten Verstellbereich der Stütze (8) eine auf die Fahrposition gerichtete Rückstellkraft auf die Stütze (8) ausübt.

3. Fahrradstützvorrichtung nach einem der vorangehenden Ansprüche, wobei die Fahrradstützvorrichtung (1, 1') eine Hinterradstützvorrichtung ist.

4. Fahrradstützvorrichtung nach einem der vorangehenden Ansprüche, wobei der Stützkopf einen Befestigungsteil (4) mit mindestens zwei Öffnungen zur lösbaren Verbindung mit dem Fahrradrahmen (2) aufweist.

5. Fahrradstützvorrichtung nach einem der vorangehenden Ansprüche mit einem Montageelement (13) zur Verbindung mit dem Stützkopf (3, 3'), wobei das Rückstellelement zwischen dem Montageelement (13) und der Stütze (8) angeordnet ist.

6. Fahrradstützvorrichtung nach einem der vorangehenden Ansprüche, wobei der Stützkopf (3, 3') einen Hohlraum (21) aufweist und das Rückstellelement mindestens teilweise in dem Hohlraum (21) angeordnet ist.

7. Fahrradstützvorrichtung nach Anspruch 6, wobei die Stütze (8) einen Lagerabschnitt (11) aufweist, der sich mindestens teilweise in den Hohlraum (21) erstreckt und um eine Schwenkachse (9) drehbar gegenüber dem Stützkopf (3, 3') gelagert ist.

8. Fahrradstützvorrichtung nach Anspruch 7, wobei das Rückstellelement eine Druckfeder (20) aufweist, die zwischen einer Aufnahme (22) des Stützkopfes (3, 3') und einer Aufnahme (23) am Lagerabschnitt (11,11') der Stütze (8) angeordnet ist.

9. Fahrradstützvorrichtung nach Anspruch 8, wobei die Aufnahme (23) am Lagerabschnitt (11, 11') im Wesentlichen kugelförmig ist.

10. Fahrrad mit einer Fahrradstützvorrichtung (1, 1') nach einem der vorangehenden Ansprüche.
